# EUROPEAN PATENT SPECIFICATION

(11) **EP 0 464 051 B1**
(45) Date of publication and mention of the grant of the patent: **10.01.1996**
(21) Application number: 90904508.0
(22) Date of filing: 06.03.1990
(51) Int. Cl.: A47J 27/00, B65D 1/00, B29C 49/64, B29C 49/08, B29C 49/56, B29C 49/70, B29D 29/00, B01L 3/00, B29C 61/02, B29C 55/26

(54) **METHOD FOR THE MANUFACTURE OF SHAPED PRODUCTS OF BIAXIALLY ORIENTED POLYMERIC MATERIAL**
VERFAHREN ZUR HERSTELLUNG GEFORMTER ERZEUGNISSE AUS BIAXIAL ORIENTIERTEM POLYMERMATERIAL
PROCEDE DE FABRICATION DE PRODUITS MOULES EN MATERIAUX POLYMERES A ORIENTATION BIAXIALE

(30) Priority: 08.03.1989 US 320699
(43) Date of publication of application: 08.01.1992
(73) Proprietor: FORTEX, INC., Denver, CO 80209 (US)
(72) Inventor: FORTIN, John K., Niwot, CO 80544 (US)
(74) Representative: Lucas, Brian Ronald
(86) International application number: US9001235
(87) International publication number: WO9010410

(56) References cited:
- BE-A- 529 591
- DE-A- 2 950 377
- GB-A- 0 474 001
- JP-B- 5 354 270
- JP-B- 5 978 824
- JP-B-56 164 817
- US-A- 1 838 309
- US-A- 3 244 780
- US-A- 3 251 914
- US-A- 4 005 967
- US-A- 4 358 492
- US-A- 4 432 340
- US-A- 4 587 075
- US-A- 4 591 060
- US-A- 4 697 718

## Description

### Field of the Invention

The present invention relates to an improved method for forming biaxially oriented container-shaped articles with flat surfaces or sharply defined contours, which are dimensionally stable up to relatively high temperatures. In particular, the invention relates to methods for making open-ended containers having superior dimensional, thermal and optical properties.

### Background of the Invention

The prior art relating to the molecular orientation and heat-shrinking processes of thermoplastic saturated linear polymers, such as polypropylene, polyethylene or polyethylene terephthalate ("PET"), is extensive. It is well known in the art that films or tubes of unoriented thermoplastics may be heated to their orientation temperature and "stretched" in order to "orient" the linear polymeric chains. Such orientation greatly increases the strength of the material in the direction of stretching. By simultaneously or serially stretching a film of unoriented linear polymer in two directions perpendicular to each other, a material of consistent superior properties in all directions is obtained. Such products are referred to as being biaxially oriented. Biaxially oriented thermoplastics have many desirable properties including increased tensile strength and elastic modulus.

There are two general categories of thermoplastics that are capable of orientation. The mono-1-olefins, such as polyethylene and polypropylene, are crystalline polymers. Other thermoplastics, most predominant among these being PET, are crystallizable polymers. Crystallizable polymers can be produced in an amorphous or non-crystalline solid state capable of being transformed into a crystalline form through heating to temperatures above the orientation temperature of the material. The length of time required to crystallize crystallizable polymers is dependent on the temperature and the degree of crystallinity required. Oriented then crystallized polymers have significantly enhanced thermal dimensional stability over crystalline polymers because of their heat-setting abilities.

The temperature employed in heat-setting a crystallable polymer defines the maximum temperature to which the product may subsequently be heated without causing the polymer to relax toward its unoriented shape.

In the case of PET, the optimal orientation temperature range in which biaxial stretching occurs is between 80°C and 110°C. U.S. Patent No. 2,823,421 of Scarlett, for example, describes a method for orienting an amorphous film of PET 3.25 times its original longitudinal width at a temperature between 80°-90°C. The temperature of the film is then raised to between 95°-110°C before it is transversely stretched. The resultant biaxially oriented film is then heat-set at a temperature in the 150°-250°C range.

Although raising the temperature of oriented PET during heat-setting will "set" the form of the film, unless restrained by some means such as tenting frames, molds or air pressure, the film tends to shrink significantly during the heat-setting process. Oriented crystalline polymers will also shrink upon heating.

The heat-shrinking characteristics of oriented crystalline and crystallizable polymers is exploited by this invention to form products with unique characteristics. For either group of polymers, the shape an article is conformed to during heat-shrinking is maintained by the article after it is cooled to room temperature. A crystalline polymer will lose its shape when heated above its orientation temperature, while a crystallizable polymer may be heat-set to temperatures above its orientation temperature but below its melting point.

Heat-shrink tubing for the insulation of electrical connections is well know in the prior art. Another example of a process used to capitalize on this property, the heat-shrinking of polyvinyl chloride, a crystalline polymer, for the purpose of placing a hard plastic coating on photoflash lamps, is described in U.S. Patent No. 4,045,530 of Reiber. U.S. Patent No. 2,784,456 of Grabenstein describes the use of bands of PET, a crystallizable polymer, to seal bottles containing beverages and foods by heat shrinking the bands over the bottle and cap juncture. Neither of these patents discloses the use of the heat-shrinking process in order to mold the shape of an article to be later used independent from the coated substrate.

Crystallizable polymers, such as PET, also may be heat-set in a non-oriented form. Raising the temperature of amorphous PET above its orientation temperature range will "set" the form of the object, producing a strong, hard but somewhat brittle material. Heat set unoriented PET is milky white and translucent and will retain its physical structure on heating to temperatures in the 200° to 250°C range.

Due to the excellent strength characteristics of oriented plastics, there are a substantial number of commercially available products composed of these materials. For example, the commonly used two liter bottles of carbonated drinks are generally made of oriented PET.

Patents describing processes and apparatus for the efficient production of open ended containers made of biaxially oriented thermoplastics are numerous. See, for example, U.S. Patent No.'s 4,711,624 of Watson; 4,381,279, 4,405,546 and 4,264,558 of Jakobsen; 4,563,325 and 3,532,786 of Coffman; and 3,412,188 and 3,439,380 of Seefluth.

The most frequently described method for forming containers utilizes a combination of injection molding and blow-forming. According to these procedures, a solution of molten thermoplastic is injection molded into a mold to form a parison or pre-form. Typically, the parison is removed from the injection mold and placed in or surrounded by a female mold. The temperature of the parison is brought into the orientation temperature range, at which time it is blow-molded into a female mold in order to biaxially orient the thermoplastic and give it its final shape.

There are several advantages in utilizing this two-step process. The portion of the parison that will be used as the neck of the container may be injection molded to contain intricate structure such as the ribbing required for a screw-on cap. This neck portion can be positioned so that its shape is retained during the blow-molding.

Once shaped, the blow-molded container may be cooled to room temperature to retain its shape. If a crystallizable polymer is used, the container may be heat-set to higher temperatures prior to cooling. If heat setting is desired, a positive pressure must be maintained in the container to prevent shrinkage during heating. For an example of this general type of apparatus and method see U.S. Patent No. 4,108,937 of Martineu.

Another series of patents describes the blow-forming or plug-forming of thermoplastic sheets. Blow-forming a sheet requires that a sheet of thermoplastic material be clamped over a mold, heated to its orientation temperature and then conformed to the mold by the action of positive pressure. In plug-molding, a male form is used to assist in the conformational process. U.S. Patent No. 4,420,454 of Kawaguchi describes a method of plug-molding followed by blow-molding to produce biaxially oriented containers.

A final series of patents describes the combined extrusion and biaxial orientation of thermoplastic tubing. See for example U.S. Patent No. 3,182,355 of Arnaudin, Jr.

In order to produce a thermoplastic laboratory beaker or other open-ended container that will be used to contain fluids that will be heated from the bottom, it is imperative that the bottom of the beaker or container be thin and flat. Typically, fluid containing beakers are heated on a hot plate. To enhance the transfer of heat from the hot plate to the fluid within the container, the more beaker surface contacting the plate and the thinner the walls of the bottom of the container the more efficient the heat transfer. None of the thermoplastic beakers currently available combine all of the following characteristics desireable in such a product:
1) generally chemically inert; 2) heat stable up to 250°C; 3) flat and thin bottom; and 4) generally inexpensive to produce.

Another common problem with each of these processes is that the overall dimensions of the oriented articles is very difficult to control within exacting standards. In particular, it is extremely difficult to produce round objects with consistent diameters or non-round objects with consistent perimeter dimensions. For many purposes these variations in dimension are not significant. However, when utilizing such techniques to form seamless belts, for example (accomplished by slicing tubular sections of biaxially oriented material) close tolerances can be critical.

### Summary of the Invention

A method for forming an unoriented sheet of thermoplastic material into a biaxially oriented container shaped article is disclosed in Claim 1 of the accompanying claims.

Applying the present invention to the production of can-shaped or beaker-shaped containers, it is possible to produce biaxially oriented products with extremely thin walls and a flat, thin bottom. Utilizing crystallizable polymers, the containers may also be heat-set in order to create a container with excellent thermal stability characteristics.

A process whereby the heat-shrink characteristics of biaxially oriented thermoplastics are used to create exact dimensions enables the formation of flat surfaces, sharp contours and texture on the interior surfaces of products and has many applications for improved products and novel articles that are not currently obtainable via existing techniques.

Containers made by the method of the present invention can have extremely thin walls, and when coupled with the proper material may have excellent physical, optical and thermal characteristics. Such products, when made of PET, are ideally suited for use in medical, biological or chemical laboratories as inexpensive, disposable, generally chemically inert and high temperature stable beakers. The resistance to chemical attack may be increased by utilizing polypropylene, although some high temperature stability will be sacrificed. In addition, when using crystallizable polymers the containers can be made with rigid rims by heating the unoriented rim portions above the orientation temperature prior to the heat-shrinking of the rest of the beaker.

Containers may be produced according to the present invention having extremely thin, flat bottoms. The thinner the bottom surface of the container, the better the container's heat transfer properties. Beakers with very thin and flat bottoms produced of biaxially oriented crystallizable polymers according to this invention, may be used for heating or boiling liquids on a laboratory hot plate.

The containers made by the present invention can be extremely light weight, and in some cases - for example, when stirring highly viscous fluids - additional support may be required. The containers of the present invention may be made of sizes and shapes so that they will fit snugly within standard laboratory glassware such as beakers to provide this support.

Japanese Patent application 56-164817 (Sumitomo Bakelite) describes the manufacture of a thin-walled cup-like container having a draw ratio of at least 1.0 from a plastic sheet. A crystalline plastic sheet is heated to above its glass transition temperature and moulded by a heated plug to a depth of at least 110% of the final formed article. Compressed air is fed to the stretched sheet from the plug side to stretch and cool the sheet. The resulting preform is removed from the plug, placed onto a male mold and reheated so that the preform shrinks against the surface of the male mold to form a container. However, there is no disclosure that the preform can be made by blow molding.

US Patent 3 244 780 discloses inter alia the formation of containers from polystyrene resins with biaxial stretching to increase the flexibility and toughness of the resultant container walls.

How the invention may be put into effect will now be described, by way of example only, with reference to the accompanying drawings.

### Brief Description of the Drawings

Fig. 1 is an exploded elevational view of an embodiment of an intermediate container-forming apparatus prior to the blow-molding step.
Fig. 2 is a view of the device shown in Fig. 1 at the completion of the blow-molding/orientation process.
Fig. 3 is an isometric view of a container made by the method of the present invention.
Fig. 4 is a cross-sectional view of a rim forming apparatus for producing containers according to a further form of the invention.
Fig. 5 is a cross-sectional view of an embodiment of a container heat-shrinking apparatus prior to the heat-shrinking process.
Fig. 6 is a view of Fig. 5 following the heat-shrinking process.

### Description of the Preferred Embodiments

The materials contemplated for use with this invention generally fall within the general category of saturated linear thermoplastic polymer compounds. Within this general category are two more specific categories of thermoplastics; crystalline polymers and crystallizable polymers.

Crystalline polymers are those saturated linear polymers that typically only exist in a crystalline solid state. Crystalline polymers may be oriented and will heat shrink after orientation, but cannot be heat-set to "lock" their oriented shape. Examples of crystalline polymers are polymers of the mono-1-olefins such as polyethylene and polypropylene, vinylidene fluoride homopolymers, fluoropolymers such as polytetrafluoroethylene ("Teflon"), and other similar polymer plastics.

Crystallizable polymers are those saturated linear polymers that may be produced by standard processing techniques in both amorphous and crystalline forms in the solid state. Amorphous crystallizable polymers are generally produced by rapidly cooling the molten polymer. Crystallizable polymers may be crystallized or "heat set" by raising the temperature of the amorphous material above the orientation temperature range of the material. The time required to heat set the material is dependent on the temperature and the extent of crystallinity desired. By heat-setting the material it will retain its shape until it reaches the highest temperature at which it was heat-set. Examples of crystallizable polymers are polyethylene terephthalate ("PET"), polyhexamethylene adipamide, polycaprolactam, polyhexamethylene sebacamide, polyethylene 2,6 and 1,5 naphthalate, polytetramethylene-1,2-dioxybenzoate, and copolymers of ethylene-terephthalate, ethyleneisophthalate, polycyclohexyldimethylene terephthalate, other crystallizable polyesters and other similar polymer plastics.

Long chain linear polymers are created via the polymerization of monomer units. The polymerization process leads to a relatively randomly oriented mass of intertwined chains of molecules. On a molecular level, it can be appreciated that at some temperature it is possible to pull on two ends of the random mass of intertwined chains in order to straighten out or "orient" many of the chains parallel to the direction of forces exerted on the mass. When such pulling is done twice in perpendicular directions, the unoriented intertwining of chains will become a much more ordered structure with perpendicularly oriented chains. This systematic orientation of chains in the material leads to materials with increased tensile strength and elastic modulus.

Following the orientation of crystallizable polymer chains, further heating acts to heat stabilize the physical form of the final product by causing chemical cross linking of the polymer chains. If a sheet of PET, for example, is blow-molded at 120°C and then cooled, the resultant product will retain its shape up to approximately 120°C. If, however, the temperature of the material is raised above 120°C to, for example, 200°C, if the shape of the material is maintained to prevent heat-shrinking during heating, the shape the product had at 200°C will be retained unless it is later reheated above that temperature.

The tendency of the molecular chains in oriented materials to try to relax to their unoriented positions when heated tends to "shrink" oriented thermoplastic materials. This general characteristic is often used advantageously to place heat-shrink coatings or wrappers on articles.

In the present invention, the heat-shrink process is used in order to shape and form articles of biaxially oriented thermoplastic materials as they exist apart from the male form onto which they are shaped.

The present invention utilizes the tendency of oriented thermoplastic material to shrink and retain its geometric dimensions upon cooling in order to produce an article with exacting dimensions that may have flat surfaces, sharp contours or texture on its inner surface. This is accomplished by forming, via known blow-molding processes, a biaxially oriented intermediate. This intermediate is then placed on a male form and the two jointly heated allowing for the formation of flat surfaces, sharp contours and interior texture on the final product via shrinkage of the intermediate onto the male form. For crystallizable polymers, a temperature greater than that required to simply heat-shrink the article may be employed in order to heat-set the shape for increased thermal stability.

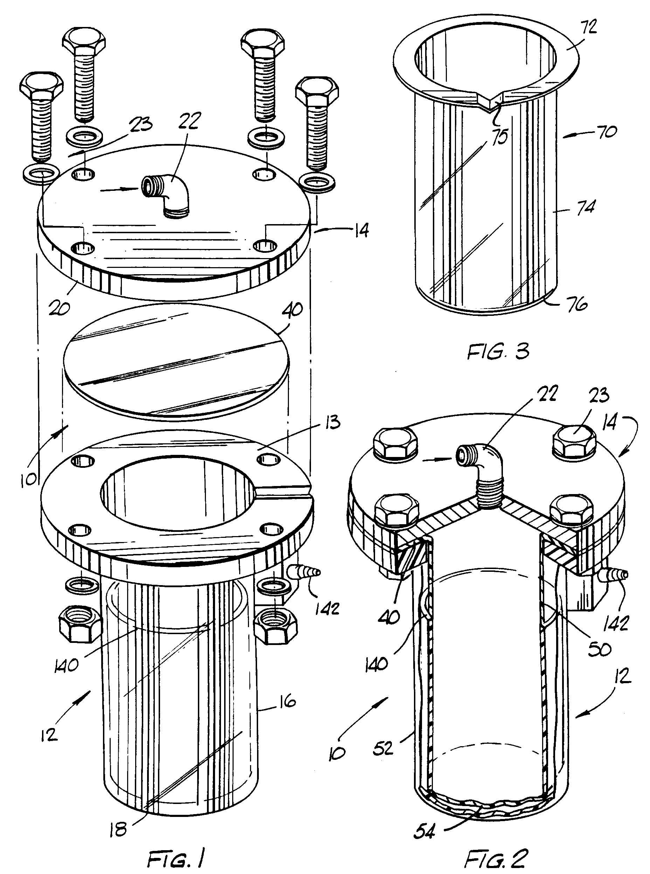

FIG.'s 1 and 2 show an apparatus 10 of the type envisioned by this invention for the production of the biaxially oriented intermediate container 50. In FIG. 1, the intermediate container forming apparatus 10 is shown. The apparatus 10 consists of a female forming tube 12, and a top clamping portion 14. The forming tube 12 consists of cylindrical side walls 16 and a bottom 18. The top clamping portion 14 consists of a flat surface 20 and a gas inlet port 22. The gas inlet port 22 is connected via conduit to a source of pressurized gas (not shown). Securing elements 23 for securing a sheet of unoriented thermoplastic material 40 between the forming tube 12 and the clamping portion 14 are required to prevent the escape of gas from the system and to prevent the sheet from being pulled into the form.

According to the present invention, the interior dimensions of the cavity of the forming tube are somewhat larger than the desired dimensions of the final product container. For example, if the final product is an open ended container having a desired outside diameter of 6,4 cm (2.5 inches) and a height of 9,6 cm (3.75 inches), the inside diameter of the side walls 16 is 6,98 cm (2.75 inches), and the height of the side wall 16 is 10,5 cm (4.125 inches). Such product has been designed to fit snugly within a standard 250 mL laboratory beaker. FIG. 1 shows the apparatus 10 prior to the blow-molding process. The sheet of unoriented thermoplastic material 40, preferably having a thichness between 0,13 and 0,25 cm (.005 and .10 inches) and most preferably about 0,04 - 0,06 cm (.015-.025 inches) thick, is held flush against the clamping portion 14 and the mouth 13 of the forming tube 12. A gasket between the two portions of the apparatus may also be desired. The apparatus and thermoplastic material are heated together to the orientation temperature of the thermoplastic material. For PET, a temperature between 70° and 120°C is required and most preferably a temperature between 85° and 95°C is utilized.

In a preferred embodiment for the production of open ended containers for use as freestanding laboratory beakers, the sheet of unoriented thermoplastic material 40, preferably has a thickness between 0,13 and 0,5 cm (.005 and .20 inches) and most preferably about 0,04 to 0,15 cm (.015 to .06 inches).

FIG. 2 shows the effect on the unoriented thermoplastic material 40 when pressurized gas, preferably air, is forced through the gas inlet port 22. The thermoplastic sheet "balloons" into the forming tube 12 and in so doing is subject to orienting forces in both the radial and tangential directions. A biaxially oriented intermediate container 50 made of PET may be produced in the time range of .1-120 secs. and preferably in .5-10 secs. A final pressure of approximately 40 p.s.i. is introduced into the cavity of the container 50, via the gas inlet port 22, to assure that a significant amount of conformation to the mold will occur. Of course, the amount of air pressure required to form an intermediate of the desired shape can vary depending on the thickness of the sheet of thermoplastic utilized. The pressure introduced via inlet port 22 is maintained for a period of time ranging from 1-60 secs. after the expansion of the thermoplastic is completed in order to assure that the thermoplastic intermediate 50 will retain its shape upon depressurization of the system. It may also be beneficial to place an air-outlet port (not shown) within the cavity of the forming tube 12 in order to vent or evacuate air from the cavity during the orientation process. interior of the forming tube 12 includes a thin sleeve 140 and an air inlet port 142 as seen in FIG. 2. The sleeve 140 rests on the bottom surface of the forming tube 12 and fits tightly against the interior walls of the forming tube 12. The sleeve does not extend to the top of the forming tube, but rather has a height approximately two-thirds to four-fifths of the side walls of forming tube 12. The air inlet port 142 is located on the upper side wall of the forming tube 12 in the area above the top of the sleeve 140. Air inlet port 142 is connected to a source of pressurized gas by a conduit (not shown). The sleeve 140 is preferably made of a smooth non-stick compound such as teflon and is about 0,08 cm (.030 inches) thick.

In order to prevent the ballooning thermoplastic sheet from sticking on the side walls of the forming tube 12, a positive air pressure is introduced into the forming tube 12 via inlet port 142 during the forming process. As the container intermediate 50 is being formed, the air introduced into the forming tube 12 forms a cylindrical pressurized area between the thermoplastic side walls and the top edge of the sleeve 140. The pressurized area at the top of the forming tube 12 helps cancel out the tendency of the thermoplastic sheet to stick to the forming tube 12 side walls at the very top, and not orient properly in that area.

The sleeve 140 serves two purposes. The upper edge creates the bottom seal of the pressurized area. The remainder of the sleeve being a material of low friction characteristics such as teflon helps reduce sticking of the thermoplastic to the side wall in the bottom portions of the forming tube 12.

The intermediate container 50 is removed from the apparatus 10 after depressurization of the apparatus 10 and the removal of the clamping portion 14 from the forming tube 12. The can-shaped intermediate 50 has generally retained the dimensions of the interior of the forming tube 122, but will have rounded corners at the interface between the container walls 52 and bottom 54. The unoriented sheet of thermoplastic 40 remains essentially unchanged outside of the area blown into the forming tube 12.

In a preferred embodiment of the present invention relating to the production of PET beaker-like containers, the final product container 70 has a flat rim-like portion 72 and thin biaxially oriented side walls 74 and bottom 76 as seen in FIG. 3. The rim portion 72 of the container 70 consists of a translucent ring of heat-set unoriented thermoplastic radiating out from the top of the side walls 74 and perpendicular to the vertical line of the side walls 74.

The rim portion 74 serves two purposes. It acts to stiffen the side walls and entire structure of the container and it services as a lip by which the entire container may be suspended from the users fingers, or from standard laboratory tongs or rings. The size of the rim is small enough that it remains aesthetically proportional to the beaker but large enough to add side wall stability and to facilitate the suspension of the container by the rim alone. Generally, these proportions create a rim dimension between 0,47 and 1,6 cm (.187 and .625 inches) wide. The thickness is determined by the thickness of the sheet of thermoplastic initially utilized.

In another preferred embodiment of the invention, the heat-set, unoriented rim may be turned upward at an angle such that drops of liquid run back into the container instead of clinging to the rim. In such a beaker the rim may be at an angle from 20 degrees to 70 degrees from horizontal. Also, a V-shaped depression, or pouring spout, may be included to assist in the pouring of liquids from the beaker.

The side walls 74 of the final product have an increasing thickness from bottom to top. The bottom portion 76 has a generally consistent gauge that is relatively thinner than any point on the side walls 74. For use as laboratory beakers for heating liquids, the thinner the bottom the better the heat transfer properties of the container. The preferred beaker according to this invention has as thin a bottom as is possible while still being structurally usable. In any event, the side walls 74 and bottom 76 are less than 0,02 cm (.010 inches) thick. Most preferably, the side walls will be less than 0,012 cm (.005 inches) thick, and the bottom will be less than approximately 0,0038 cm (.0015 inches) thick.

In an additional preferred embodiment of a stand alone open-ended container or beaker of the present invention, the increased thickness from bottom to top greatly enhances the use of the beaker for heating fluids on a heat source such as a laboratory hot plate. The heavier sidewalls near the rim provide sufficient stability for gripping the beaker, and the thin bottom promotes the heat transfer rate between the plate and fluid in the beaker. In this preferred embodiment the side walls and bottom are less than about .060 inches thick. Most preferably, in a free standing beaker of this invention produced from a sheet of consistent gauge thermoplastic, the side walls are about 0,02 to 0,08 cm (.010 to .035) at their thickest point near the rim and have bottom thickness of about 0,03 to 0,05 cm (.001 to .020 inches). The optimal embodiment for a heatable beaker has the thinnest bottom possible to be formed in conjunction with side walls that have sufficient thickness to be structurally stable and feel solid in the hand or in laboratory tongs. In an additional embodiment, the thermoplastic sheet utilized to form the beaker may have an area of decreased thickness near the center of said sheet which, when formed, will become the beaker bottom. In this manner, the bottom thickness may be even further reduced while maintaining acceptable thickness of the beaker walls.

As mentioned previously, the thinner the beaker bottom, the better the heat transfer from the hot plate to the fluid in the container. This is also true the flatter the bottom of the beaker. The thin bottom is also valuable, in that it is flexible enough that the weight of the fluid in the beaker will help flatten the bottom and maximize surface contact with the heat source. As discussed, thick sidewalls are preferable for stiffness, and thin bottoms are preferable for rapid and even heating. So, in all preferred embodiments, the thickness of the walls at their thickness point is greater than the thickness of the bottom by a factor of at least about 1.5. In the most preferred embodiment, the wall thickness at its thickest point is at least about 2.0 times the thickness of the bottom surface of the container.

The present invention includes the method of heating fluids by introducing fluids into a container or beaker as described above, placing said beaker onto a hot plate or any other suitable source of heat and increasing the temperature of the fluid in the container. The heating or boiling of fluids in laboratory settings is required in an almost unlimited number of situations in medical, research, environmental and clinical settings.

In one embodiment of the present invention, the rim portion of the container may have a single V-shaped depression 75 to assist in the pouring of liquids out of the completed product container 70. The depression 75 is most conveniently formed in the intermediate forming process, by adapting 77 the upper surface of the forming tube 122 and the adjacent surface of the clamping portion 14 to form the V-shaped depression 75 in the rim of the container. During pressurization of the intermediate the heated sheet will be forced into the V-shaped depression 77.

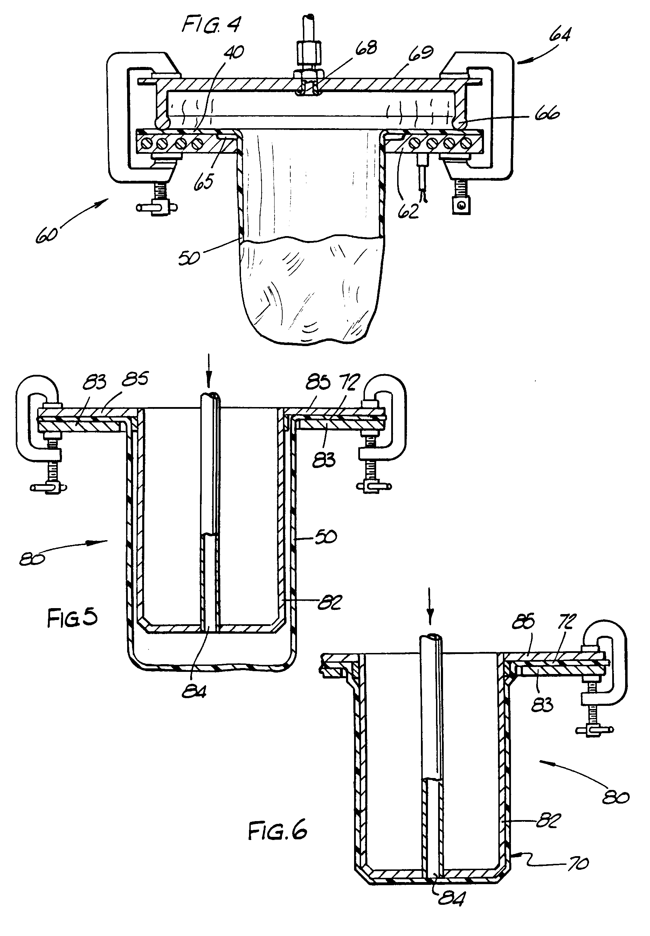

FIG. 4 shows a rim forming apparatus 60 that will heat-set the flat portions of the unoriented thermoplastic sheet 40 surrounding the intermediate container 50. The rim forming apparatus 60 consists of a hot plate 62 and a clamping element 64. The hot plate 62 has a circular opening that allows the intermediate container 50 to fit snugly within the opening so that all of the flat unoriented sheet 40 will contact the flat horizontal surface of the hot plate 69, a tubular or cylindrical rim 66 that sits on the upper surface of the amorphous, unoriented sheet to form an air-tight seal, and a gas inlet 68. The gas inlet 68 is associated via a conduit to an air compressor (not shown). The rim forming apparatus 60 may also be equipped with V-shaped depressions in the hot plate 62 for the heat setting of the V-shaped pouring spout.

In order to heat-set the rim portion 55 of the intermediate container 50, the container 50 is placed within the opening of the hot plate 62 and the clamping element 64 is secured in place above the hot plate 62 while holding the flat unoriented sheet 40 tightly against the hot plate. An increased pressure is maintained in the cavity of the rim forming apparatus 60 due to the introduction of gas into the system via the gas inlet 68. The increased pressure helps to assure that the unoriented sheet 40 is held flat against the hot plate 62. The surface temperature of the hot plate, is elevated above the orientation range of the thermoplastic, preferably in the 150°-250°C range for PET.

In a preferred embodiment, the hot plate 62 of the rim forming apparatus 60 has a step-up ridge 65 surrounding the opening. The ridge has a diameter sufficiently larger than the diameter of the intermediate container 50 so that when the excess sheet is cut away from the final product 70 it will not be included on the rim 72 of the container. The presence of the step-up ridge 65 allows the rim portion to be heat-set without the formation of any wrinkles in the rim 72 by providing an area to accommodate thermal expansion of the rim during heating.

Upon cooling, release of the pressure, and removal of the intermediate container 50 from the rim forming apparatus 60, the rim portion 72 is structurally attached to the side walls of the intermediate container 50, is relatively rigid and, if PET is utilized, has a translucent appearance. In the preferred embodiment, the rim 72 is generally perpendicular to the side walls of the container 50. The stiffened rim also facilitates the final heat-shrinking operation by providing a firm surface to grip while heating.

In an alternative embodiment of the rim forming portion of the present invention, the unoriented thermoplastic may be pressed between two heated, contoured forms and held until heat set.

FIG. 5 shows a heat-shrinking apparatus 80, The apparatus 80 consists of a male form 82 and a clamping ring 83. The male form 82 is shaped according to the desired interior dimensions of the final product container 70. The form 82 may contain flat surfaces, sharp contours, texturing, or raised or depressed printing, in order to create a logo or other markings. The portion of the male form 82 that will be in contact and give shape to the bottom of the final container product 70, is equipped with a gas exhaust port 84. The gas exhaust port 84 is associated with a source of compressed gas via a conduit (not shown).

For some configurations of the male form 82, for example when there are sharply contrasted indentations, it may be necessary to encompass the entire apparatus 80 and to provide an exterior air pressure source in order to assist the conformational process (not shown).

The clamping ring 83 consists of a ring that will fit over the container 50 and can be clamped in place in order to tightly hold the preformed rim 72 of the intermediate container 50 against the rim portion 85 of the male form 82.

The heat-shrinking process requires that the intermediate container 50 be clamped into place within the heat-shrinking apparatus 80 as shown in FIG. 5. The initial temperature of the male form 82 should be at or below the orientation temperature in order to prevent the formation of localized areas of shrinkage when the intermediate 50 is being placed over the male form. The male form 82 and the container 50 are heated together to a temperature greater than the orientation temperature of the thermoplastic. Preferably, when utilizing PET, the temperature will be raised into the 120°-250°C range. Most preferably, when PET is utilized the heat set/heat shrinking temperature will be in the 180° to 250°C range. The melt temperature of PET is about 250°C. Heat setting will preferably occur for any crystallizable polymer within at least 75°C of the melt temperature of the thermoplastic. Once the desired maximum temperature is reached, the intermediate container 50 will have conformed to the shape of the male form 82, as shown in FIG. 6, and may be immediately cooled.

The finished container 70 and the heat-shrinking apparatus 80 is then typically cooled before removal of the container from the male form 82 is attempted. It is also preferred to reduce the temperature below the orientation temperature of the material in order to prevent any unwanted shape distortion when using air pressure to help remove the product from the male form. In the embodiment shown in FIG. 6, the removal of the container 70 is assisted by the introduction of high pressure gas through the gas exhaust port 84 of the male form 82. The introduction of a high pressure gas source to assist in the removal of the container may take any number of actual forms. For example, the male form 82 can have numerous very small exhaust ports over its entire surface. It is also possible to provide the surface of the male form with special coatings, for example "teflon," that assist in the process of removing the final product from the form. It may be desirable to place a female form over the product when "blowing" it off the male mold to help assure that the overall dimensions are not altered at this stage.

The rim 72 of the final product 70 may be trimmed to the desired dimension, and the exterior surface may be painted or labelled via conventional techniques. The container 70 of a final product made of PET consists of a translucent, heat-set, unoriented thermoplastic rim and a cylindrical wall and bottom of a thin, clear, biaxially oriented thermoplastic material. If the thermoplastic is a crystalline polymer, the container will retain its shape up to approximately the orientation temperature of the material. If the thermoplastic is a crystallizable polymer, the container will retain its shape up to approximately the heat-shrink/heat-set maximum temperature. In addition, the biaxially oriented sidewalls and bottom may have flat surfaces, sharp contours and texture or ribbing on its inner surface. In the case of beakers, a flat bottom increases the stability of the article and the contact area for heat transfer.

## Claims

1. A method for forming an unoriented sheet of thermoplastic material (40) into a biaxially oriented container-shaped article (70, Fig 3), comprising clamping the sheet of material over the mouth of a forming tube (12), heating the sheet (40) to about the orientation temperature of the thermoplastic material, forming an intermediate container-shaped article (50, Figs 2 and 4) by deforming a portion of the sheet (40) so that it enters into the forming tube (12) and becomes biaxially oriented, placing the intermediate (50) on a male form (82) of a predetermined size, shape and texture, heating the intermediate (50) and form (82) above the orientation temperature of said material to heat shrink the intermediate onto the surface of the male form (82) and create a final shape, cooling the heat-shrunk product (70) and removing the heat-shrunk product (70) from the male form (82), whereby the sheet (40) is formed into a biaxially oriented container-shaped intermediate article (50) by applying fluid pressure to a face of the sheet (40) characterised in that:
(a) the method is performed in the absence of a forming plug to cause the sheet to conform to the interior shape of the forming tube (12); and
(b) means (140,142) is provided for preventing the material entering into and conforming to the shape of the forming tube (12) from sticking to the walls of the forming tube, so as to permit the biaxial orientation to occur.

2. The method of claim 1, wherein the depth of draw of the intermediate container-shaped article (50) is sufficient for full orientation of a side wall thereof.

3. The method of claim 1 or 2, wherein the thermoplastic material is a crystallisable polymer.

4. The method of claim 3, wherein the crystallisable polymer is a polyester, polyhexamethylene adipamide, polycaprolactam or polyhexamethylene sebacamide.

5. The method of claim 1 or 2, wherein the thermoplastic material is polyethylene terephthalate.

6. The method of claim 5, wherein for formation of the intermediate container-shaped article the apparatus (10) including the forming tube (12) and the sheet (40) are heated to a temperature between 85 and 95°C.

7. The method of any preceding claim, wherein a sleeve (140) of smooth non-stick material for reduction of sticking of the thermoplastic material to the side wall of the forming tube (12) rests on a flat bottom surface of the tube (12), fits tightly against the interior of the side wall and has a height 2/3 to 4/5 of that of the side wall, and wherein during forming of the intermediate container-shaped article air under pressure is introduced into a cylindrical region of the tube (12) above the sleeve (140) to reduce the tendency of the thermoplastic material above the sleeve (140) to adhere to the side wall of the forming tube (12).

8. The method of any preceding claim, wherein the base of the male form (82) is flat so that the resulting heat-shrunk container (70) has a flat bottom (76).

9. The method of any preceding claim, further comprising forming an unoriented heat set thermoplastic rim (72) adjacent to the mouth of the container (70).

10. The method of claim 9, wherein there is formed a rim (72) between 4,74mm (0.187") and 15.88mm (0.625") wide.

11. The method of claim 9 or 10, wherein there is formed in the rim (72) a pouring spout.

12. A method according to any preceding claim, wherein the container (50) is heat set at a temperature at or within 75°C of its melt temperature.

13. A method according to claim 12, wherein the container is of polyethylene terephthalate and is heat set at about 180°C to 250°C.

14. A process for heating fluid over a heat source, comprising providing a container made by the method of any of claims 1-13, introducing fluid into the container, and placing the container on a heat source so as to raise the temperature of the fluid.

## Patentansprüche

1. Verfahren zur Ausformung einer unorientierten Folie thermoplastischen Materials (40) in einem biaxial orientierten behälterförmigen Artikel (70, Fig. 3), bestehend aus dem Anbringen des Folienmaterials über der Öffnung eines Formrohres (12), Erhitzen des thermoplastischen Materials der Folie (40) über die Orientierungstemperatur, Ausbildung eines behälterförmigen Zwischenartikels (50, Fig. 2 und 4) durch Deformierung eines Teils der Folie (40), so daß es in das Formrohr (12) eintritt und biaxial orientiert wird, Plazierung des Zwischenartikels (50) auf einer dornähnlichen Form (82) vorbestimmter Größe, Form und Beschaffenheit, Erhitzen des Zwischenartikels (50) und der Form (82) über die Orientierungstemperatur, um den Zwischenartikel durch Wärme auf die Oberfläche der dornähnlichen Form (82) zu schrumpfen und eine Endform zu schaffen, Abkühlen des Heißschrumpfproduktes (70) und Entfernen des Heißschrumpfproduktes von der dornähnlichen Form (82), wodurch die Folie (40) zu einem biaxial orientierten, behälterförmigen Zwischenartikel (50) durch Anwendung von Flüssigkeitsdruck auf die Folienoberfläche geformt wird, dadurch gekennzeichnet, daß
a) das Verfahren in Abwesenheit eines Formstopfens ausgeführt wird, um die Folie zu veranlassen, sich der inneren Gestalt des Formrohres (12) anzupassen, und daß
b) Mittel (140, 142) vorgesehen sind, um zu verhindern, daß das eintretende und sich an die Gestalt des Formrohres (12) anpassende Material an den Wänden des Formrohres festklebt, so daß eine biaxiale Orientierung möglich ist.

2. Verfahren nach Anspruch 1, dadurch gekennzeichnet, daß die Hubtiefe des behälterförmigen Zwischenartikels (50) für die volle Orientierung einer Seitenwand ausreichend ist.

3. Verfahren nach Anspruch 1 oder 2, dadurch gekennzeichnet, daß das thermoplastische Material ein kristallisierbares Polymer ist.

4. Verfahren nach Anspruch 3, dadurch gekennzeichnet, daß das kristallisierbare Polymer ein Polyester, Polyhexamethylenadipinsäureamid, Polykaprolactan oder ein Polyhexamethylensebazinsäureamid ist.

5. Verfahren nach Anspruch 1 oder 2, dadurch gekennzeichnet, daß das thermoplastische Material ein Polyäthylenterephthalat ist.

6. Verfahren nach Anspruch 5, dadurch gekennzeichnet, daß zur Bildung des behälterförmigen Zwischenartikels der Apparat (10) mit dem Formrohr (12) und der Folie (40) auf eine Temperatur zwischen 85 und 95°C erhitzt werden.

7. Verfahren nach einem der vorhergehenden Ansprüche, dadurch gekennzeichnet, daß eine Hülse (140) aus glattem nicht klebenden Material zur Reduzierung des Anklebens des thermoplastischen Materials an der Seitenwand des Formrohres (12) auf einer flachen Bodenfläche des Rohres (12) ruht, dicht an der inneren Seitenwand anliegt und eine Höhe von 2/3 bis 4/5 der Seitenwand hat und wobei während der Ausbildung des behälterförmigen Zwischenartikels Druckluft in die zylindrische Region des Rohres (12) oberhalb der Hülse (140) eingeführt wird, um die Neigung des thermoplastischen Materials, oberhalb der Hülse (140) an der Seitenwand des Formrohres (12) zu haften, zu verringern.

8. Verfahren nach einem der vorhergehenden Ansprüche, dadurch gekennzeichnet, daß die Grundfläche der dornähnlichen Form (82) eben ist, so daß der sich daraus ergebende Wärmeschrumpfbehälter (70) einen flachen Boden (76) hat.

9. Verfahren nach einem der vorhergehenden Ansprüche, dadurch gekennzeichnet, daß ferner ein durch Wärme verfestigter, nicht orientierter thermoplastischer Rand (72) neben der Öffnung des Behälters (70) ausgebildet wird.

10. Verfahren nach Anspruch 9, dadurch gekennzeichnet, daß ein Rand (72) mit einer Breite zwischen 4,74mm (0,187") und 15,88mm (0,625") ausgebildet wird.

11. Verfahren nach Anspruch 9 oder 10, dadurch gekennzeichnet, daß in den Rand (72) eine Gießrinne eingeformt wird.

12. Verfahren nach einem der vorhergehenden Ansprüche, dadurch gekennzeichnet, daß der Behälter (50) bei einer Temperatur heißfixiert wird, die bis zu ± 75°C seiner Schmelztemperatur beträgt.

13. Verfahren nach Anspruch 12, dadurch gekennzeichnet, daß der Behälter aus Polyäthylenterephthalat besteht und bei 180°C bis 250°C heißfixiert wird.

14. Verfahren zum Erwärmen einer Flüssigkeit über einer Wärmequelle unter Verwendung eines Behälters, hergestellt nach dem Verfahren nach einem der Ansprüche 1 bis 13, dadurch gekennzeichnet, daß die Flüssigkeit in den Behälter gegeben und der Behälter auf eine Wärmequelle gebracht wird, um die Temperatur der Flüssigkeit zu erhöhen.

## Revendications

1. Procédé pour former une feuille non orientée de matériau thermoplastique (40) en un article moulé en forme de conteneur, à orientation biaxiale (70, Figure 3), consistant à bloquer la feuille de matériau sur l'ouverture d'un tube de formage (12), à chauffer la feuille (40) à environ la température d'orientation du matériau thermoplastique, a former un article intermédiaire moulé en forme de conteneur (50, figures 2 et 4) en déformant une partie de la feuille (40) de façon à ce qu'elle pénètre dans le tube de formage (12) et devienne orientée biaxialement, à placer l'article intermédiaire (50) sur une forme mâle (82) d'une dimension , forme et texture prédéterminées , a chauffer l'article intermédiaire (50) et la forme (82) au-dessus de la température d'orientation dudit matériau pour reserrer à la chaleur l'article intermédiaire sur la surface de la forme mâle (82) et créer une forme finale , à refroidir le produit rétréci à chaud (70) et enlever le produit rétréci à chaud (70) de la forme mâle (82) de sorte que la feuille (40) soit formée en un article intermédiaire monté en forme de conteneur à orientation biaxiale (50) en appliquant une pression de fluide à une face de la feuille (40) , caractérisé en ce que:
a) le procédé est réalisé en l'absence d'un bouchon de formage pour entrainer la feuille à se conformer à la configuration intérieure du tube de formage (12) ; et
b) des moyens (140, 142) sont prévus pour empêcher le matériau entrant dans et se conformant à la forme du tube de formage (12) de coller aux parois du tube de formage , de façon à permettre à l'orientation biaxiale de se produire .

2. Procédé selon la revendication 1 , dans lequel la profondeur du dessin de l'article intermédiaire moulé en forme de conteneur (50) est suffisante pour une orientation complète d'une paroi latérale de ce dernier.

3. Procédé selon la revendication 1 ou 2, dans lequel le matériau thermoplastique est un polymère cristallisable.

4. Procédé selon la revendication 3 , dans lequel le polymère cristallisable est un polyester , un adipamide de polyhexaméthylène , un polycaprolactame ou un sébacamide de polyhexaméthylène.

5. Procédé selon la revendication 1 ou 2, dans lequel le matériau thermoplastique est du polytéréphtalate d'éthylène.

6. Procédé selon la revendication 5, dans lequel en vue de la formation de l'article intermédiaire moulé en forme de conteneur , l'appareil (10) incluant le tube de formage (12) et la feuille (40) est chauffé à une température comprise entre 85 et 95°C.

7. Procédé selon l'une quelconque des revendications précédentes, dans lequel un manchon (140) de matériau lisse non collant destiné à réduire l'adhérence du matériau thermoplastique à la paroi latérale du tube de formage (12) repose sur une surface inférieure plane du tube (12), s'ajuste étroitement contre l'intérieur de la paroi latérale et présente une hauteur de 2/3 à 4/5 de celle de la paroi latérale, et dans lequel pendant la formation de l'article intermédiaire moulé en forme de conteneur, de l'air sous pression est introduit dans une zone cylindrique du tube (12) au-dessus du manchon (140) pour réduire la tendance du matériau thermoplastique au-dessus du manchon à adhérer à, la paroi latérale du tube de formation (12).

8. Procédé selon l'une quelconque des revendications précédentes, dans lequel la base de la forme mâle (82) est plate de sorte que le conteneur rétréci à chaud résultant (70) comporte un fond plat (76).

9. Procédé selon l'une quelconque des revendications précédentes, consistant de plus à former un rebord thermoplastique non orienté thermoformé (72) adjacent à l'ouverture du conteneur (70).

10. Procédé selon la revendication 9, dans lequel on forme un rebord (72) de largeur comprise entre 4,74 mm (0,187") et 15,88 mm (0,625").

11. Procédé selon la revendication 9 ou 10, dans lequel une gouttière de déversement est formée dans le rebord (72) .

12. Procédé selon l'une quelconque des revendications précédentes , dans lequel le conteneur (50) est thermoformé à une température égale à sa température de fusion, ou à moins de 75°C de cette température.

13. Procédé selon la revendication 12, dans lequel le conteneur est constitué de polytéréphtalate d'éthylène et est thermoformé à une température de 180°C à 250°C environ.

14. Procédé pour chauffer un fluide sur une source de chaleur , consistant à fournir un conteneur fabriqué selon le procédé de l'une quelconque des revendications 1 à 13, à introduire un fluide dans le conteneur et à placer le conteneur sur une source de chaleur de façon à élever la température du fluide.
